# EUROPÄISCHE PATENTSCHRIFT

(11) **EP 2 656 905 B1**
(45) Veröffentlichungstag und Bekanntmachung des Hinweises auf die Patenterteilung: **29.07.2020**
(21) Anmeldenummer: 13163039.4
(22) Anmeldetag: 10.04.2013
(51) Int. Cl.: B01D 61/14, B01D 63/16, C02F 1/44, C02F 101/20

(54) **Entquickung von Lösungen durch Ultrafiltration**
Removal of mercury from solutions by means of ultrafiltration
Elimination de mercure de solutions par ultrafiltration

(30) Priorität: 27.04.2012 DE 102012207115
(43) Veröffentlichungstag der Anmeldung: 30.10.2013
(73) Patentinhaber: Evonik Operations GmbH, 45128 Essen (DE)
(72) Erfinder: Horn, Michael, 53859 Niederkassel (DE); Helpap, Bernd, 53125 Bonn (DE); Thiel, Michael, 51570 Windeck - Dattenfeld (DE); Neumann, Manfred, 45770 Marl (DE)
(74) Vertreter: Evonik Patent Association

(56) Entgegenhaltungen:
- EP-A2- 0 761 830
- GB-A- 1 352 009
- US-A- 4 094 669
- US-A1- 2001 025 814
- US-A1- 2009 159 523
- US-A1- 2010 147 745

## Beschreibung

Die vorliegende Erfindung betrifft die Verwendung von Filtrationsmembranen mit einer Porengröße von kleiner oder gleich 0,1 µm und insbesondere bevorzugt kleiner oder gleich 0,05 µm zur Entfernung von Quecksilber aus Quecksilber enthaltenden Alkalialkoholatlösungen.

Alkalische Lösungen, die mittels Amalgamverfahren erzeugt werden können (wässrige und organische Laugen) weisen meist einen unerwünschten Gehalt an metallischem Quecksilber auf. Durch nachgeschaltete mehrstufige Verfahrensschritte gelingt es in der Regel, Ausgangskonzentrationen an Quecksilber von bis zu 80000 µg/l und höher auf Werte kleiner 50 µg/l zu erniedrigen.
Zur Erhöhung der Produktqualität und zur Erweiterung des Einsatzbereichs dieser wässrigen Laugen und der Alkoholate (organische Laugen) ist es wünschenswert, mittels eines einfachen und dabei wirtschaftlichen Verfahrens Quecksilberreste aus den Lösungen zu entfernen.

Das technisch am weitesten verbreitete Verfahren ist die Entquickung (Quecksilberentfernung) von Lösungen durch Behandlung mit Aktivkohle.
Nach DE-A-26 43 478 ist Aktivkohle mit hoher spezifischer Oberfläche für eine Entquickung geeignet, wobei über die Korngröße der Aktivkohle keine Aussage gemacht wird. Für die bei der Chloralkalielektrolyse anfallenden Solen wird in DE-A-20 51 725 eine Aktivkohlebehandlung beschrieben. In DE-A-34 38 098 wird eine mit Quecksilber oder mit Quecksilbersalzen vorbehandelte Aktivkohle in einem Filterbett eingesetzt.
Nachteilig bei der Verwendung einer extrem feinen Pulverkohle ist, dass selbst kleine Mengen an Schwebstoffen, die in den zu behandelnden Lösungen enthalten sein können, die Standzeiten durch Verstopfung erheblich herabsetzen.
Darüber hinaus ist bei den bekannten Kohlefiltrationsverfahren unter anderem die Neigung der hochoberflächigen Aktivkohlen zur Bildung feinster Aktivkohlepulver störend, die zu hohen Druckverlusten und niedrigen Filterleistungen führt. Ein weiteres, mit üblichen Aktivkohlefiltrationen verbundenes Problem ist die Entsorgung der mit Quecksilber beladenen Aktivkohle. In aller Regel ist dazu die Aktivkohle chemisch oder thermisch zu behandeln, bevor sie deponiert werden kann. Diese zusätzlichen Verfahrensschritte sind komplex bzw. energetisch aufwendig.

Eine Möglichkeit zur Entquickung ist durch die bekannte Eigenschaft des Quecksilbers gegeben, Amalgame zu bilden. Hierzu kommt beispielsweise ein mit einer Silberschicht beladenes, feinkörniges Material oder ein geeignetes Metall mit möglichst großer Oberfläche, z.B. Wolle, gegebenenfalls eingesetzt als Elektrode in einer Elektrolysezelle, in Frage. Die Abtrennung von Quecksilber durch Amalgambildung wird in DE-A- 42 21 207 mit Hilfe einer silberbeschichteten Faser und in DE-A-25 18 433 mit Hilfe von Nickelwolle vorgenommen. Derartige Medien erschöpfen sich jedoch schnell, wenn der Quecksilbergehalt der Lösung über längere Zeit erheblich ist. Sie sind dabei vergleichsweise unwirtschaftlich, da nicht immer eine Rückgewinnung der teuren Amalgamierungsmetalle technisch möglich ist.

Eine Reinigung von mit Quecksilber belasteten Abwässern wird auch in JP 83/128 182 angegeben. Dabei verwendet man eine Röhre, die oben und unten mit einem säurefesten Harzfilter versehen ist und zwischen den Filtern 85 bis 95 Vol.-% Aktivkohle und darüber 15 bis 5 Vol.-% Kohlenstaub enthält. Das belastete Abwasser wird von oben nach unten durch die Röhre geleitet, wobei der Kohlenstaub die Schwebstoffe und die Aktivkohle die schädlichen Substanzen (vor allem Quecksilber) entfernt. Beispielsweise werden dabei Quecksilbergehalte von 37 mg/l auf 0,0005 mg/l reduziert.

Gemeinsam ist den oben erwähnten Verfahren, dass sie zur Entquickung wässriger Lösungen konzipiert sind. Das geht aus den Beispielen hervor: Ihr Gegenstand ist im besonderen die Behandlung von Natronlauge, Sodalösungen oder Solen. Eine einfache Übertragung auf Alkalialkoholat-Lösungen erweist sich als nicht immer möglich, teils wegen fehlender Wirksamkeit, teils wegen ungenügender Standzeiten, teils wegen der Verwendung von unbeständigen Filterhilfsmitteln.

Aus DE 195 32 364 und EP 0 761 830 A2 ist ein Verfahren zum Abtrennen von Quecksilber aus Flüssigkeiten bekannt, bei dem ein Quecksilber enthaltender Flüssigkeitsstrom entlang einer Oberfläche fließen gelassen wird, die so strukturiert ist, dass sich bei dem Fluss Quecksilbertropfen wachsender Größe bilden.

Die US 4,094,669 A beschreibt die Verwendung angefeuchteter PTFE-Membranen zur Filtration metallisches Quecksilber enthaltenden Lösungen, wobei die Membranen eine Porengröße von 0,2 bis 0,3 µm aufweisen.

Die GB 1,352,009 A beschreibt die die Filtration einer elementares Quecksilber enthaltenden Lösung durch eine Membran. Dabei handelt es sich um Lösungen aus einer Chlorelektrolysezelle.

Die US 2010/147745 A1 beschreibt die Quecksilberentfernung aus einem Gaskondensat, welches Quecksilber enthalten kann.

Die US 2009/159523 A1 beschreibt ein Verfahren zur Aufreinigung von Abwasserströmen, die Quecksilber enthalten können.

Die US 2001/025814 A1 beschreibt eine flache Membranscheibe, die zur Filtration von Verunreinigungen aus Wasser verwendet werden kann.

Zur Entfernung von feinen Schwebstoffen und Schlämmen werden in der Technik oft Zentrifugen bzw. Separatoren eingesetzt. Solche Geräte sind jedoch aufgrund ihrer beweglichen Teile störungsanfällig und wartungsintensiv. Wünschenswert ist daher eine

Methode, die die Entfernung von Schwebstoffen auf einfachere Weise ermöglicht.

Aufgabe der vorliegenden Erfindung ist es daher, ein einfaches und wirtschaftlich befriedigendes Verfahren zur Entfernung von Quecksilber zu finden, mit dem die Quecksilbergehalte in Alkalialkoholatlösungen abgesenkt werden können.

Gegenstand der vorliegenden Erfindung ist die Verwendung von Filtrationsmembranen mit einer Porengröße von kleiner oder gleich 0,1 µm und insbesondere bevorzugt kleiner oder gleich 0,05 µm zur Entfernung von Quecksilber aus Quecksilber enthaltenden Lösungen, wobei die Quecksilber enthaltenden Lösungen Alkalialkoholatlösungen sind, und wobei die Lösungen vollkommen schwebstoffrei bzw. frei von anderweitig enthaltenen Trübstoffen sind, und wobei die Filtrationsmembranen um eine Rotationsachse rotieren.

Lösungen im Sinne der vorliegenden Erfindung sind alle dem Fachmann bekannten Flüssigkeiten (Materie im flüssigen Aggregatzustand), wobei diese sowohl homogene Gemische aus mindestens zwei chemischen Stoffen als auch Reinsubstanzen umfassen können.

Erfindungswesentlich ist der Einsatz von Filtrationsmembranen mit einer Porengröße von kleiner oder gleich 0,1 µm und insbesondere bevorzugt kleiner oder gleich 0,05 µm, vorzugsweise 0,005 bis 0,1 µm und insbesondere bevorzugt 0,005 bis 0,05 µm, und ganz besonders bevorzugt von 0,03 µm bis 0,01 µm. Derartige Filtrationsmembranen werden im Rahmen der vorliegenden Erfindung als Ultrafiltrationsmembranen bezeichnet. Ultrafiltrationsmembranen lassen sich neben der Kategorisierung nach Porengröße bzw. Rückhaltevermögen auch hinsichtlich der Porenstruktur unterscheiden. Entsprechend den Ausführungen u. a. in EP 2024068 wird zwischen symmetrischen und asymmetrischen Strukturen unterschieden. Gemeinhin ist es notwendig, die Ultrafiltrationsmembranen mit einem auf der Permeatseite liegenden Stützgewebe oder -körper auszurüsten.

Das zum Einsatz kommende Polymer für die Membran variiert je nach Anwendungsbereich. Üblicherweise eingesetzte Materialien können Sulfonpolymere (z. B. Polyethersulfon), Zellulose, Polyvinylidenfluorid (PVDF), Polyacrylnitril bzw. -copolymere, Polytetrafluorethylen (PTFE) aber auch Keramiken, wie Aluminiumoxid, sein.

Die Auswahl des eingesetzten Membranmaterials wird durch dass zu filtrierende Medium bestimmt. Für die Hg-Entfernung aus wässrigen Laugen lassen sich dabei verschiedene Systeme einsetzen, insbesondere Filtrationsmembranen auf Basis von Polyethersulfon, Polytetrafluorethylen (PTFE) oder Polyvinylidenfluorid (PVDF). Die Einsatzmöglichkeit in Alkoholatlösungen ist dagegen stärker eingeschränkt, in diesem Falle werden bevorzugt Membranen auf Basis von PTFE eingesetzt.

Ein weiterer Gegenstand der vorliegenden Erfindung ist ein Verfahren zur Entfernung von Quecksilber aus Quecksilber enthaltenden Lösungen durch Filtration, dadurch gekennzeichnet, dass Filtrationsmembranen mit einer Porengröße von kleiner oder gleich 0,1 µm und insbesondere bevorzugt kleiner oder gleich 0,05 µm eingesetzt werden, wobei die Quecksilber enthaltenden Lösungen Alkalialkoholatlösungen sind, wobei die Lösungen vollkommen schwebstoffrei bzw. frei von anderweitig enthaltenen Trübstoffen sind, und wobei die Filtrationsmembranen um eine Rotationsachse rotieren. Vorzugsweise liegen die Filtrationsmembranen in Form von Scheiben vor.

Diese sogenannten Ultrafiltrationsmembranen werden insbesondere in Cross-Flow- Filtrationen eingesetzt, die sich in der Regel dadurch auszeichnen, dass lediglich ein Teilstrom filtriert wird (Permeat), der größere Anteil aber als Retentat im Kreis gefahren wird. Die Ausgangslösung (Feed) wird dabei durch Filtrationsröhren mit Strömungsgeschwindigkeiten von 5 m/s und höher gepresst. Die Überströmung der Membran soll dabei sicherstellen, dass keine Blockierung der Trennschicht den Permeatfluß einschränkt. Aufgrund des Strömungsgradienten über die Filtrationsstrecke, die sich aus der Aufteilung des Feeds in Retentat und Permeat über die Rohrlänge ergibt, ist eine Blockierung allerdings nicht immer auszuschließen. Weiterentwicklungen der cross flow filtration versuchen die Überströmung der Membranoberfläche durch Bewegung der Membran im zu filternden Medium sicherzustellen. Aus diesem Grund wird die Membran einer Rotation ausgesetzt. Die Filtrationskörper werden in diesen Fällen als Scheiben eingesetzt und das Permeat über den Scheibeninnenkörper und der rotierenden Hohlwelle aus dem System abgeführt (EP 0577854, EP 1854526). Das Filtergehäuse wird auch in diesem Fall stetig durchströmt und das Retentat aufkonzentriert.

Überraschenderweise konnte festgestellt werden, dass es möglich ist, aus klaren, vollkommen schwebstofffreien Lösungen bzw. Lösungen frei von anderweitig enthaltenen Trübstoffen, Quecksilber effektiv abzuscheiden. Genutzt wurde dabei die in EP 1854526 beschriebene Tubulator-Rotor-Filtration (TRF). Prinzipiell lassen sich für die Entquickung von Lösungen auch andere Ultrafiltrationsverfahren mit rotierenden Membranscheiben einsetzen, z. B. der Single Shaft Disk Filter (SSD-Filter).

Bei der TRF werden Scheiben mit Durchmessern von ca. 100 mm um eine Rotationsachse gedreht, wobei die Scheiben einen deutlichen Abstand von der Rotationsachse haben (Abstand 400 mm und größer).
Bei einem SSD-Filter rotiert die wesentlich größere Filterscheibe um ihren Mittelpunkt. Der Vorteil des TRF-Verfahrens liegt darin, dass die Überströmungsgeschwindigkeit im Vergleich zum SSD-Filter über der gesamten Filterfläche weitestgehend gleich ist.

In der vorliegenden Erfindung rotieren die Filtrationsmembranen um eine Rotationsachse. Aufgrund der ständigen Rotation der Filterscheiben kann sichergestellt werden, dass die Membranen nur langsam verblocken. Um eine umfassende irreversible Verblockung der Oberflächen und damit die Notwendigkeit eines Filterwechsels zu umgehen, werden nach bestimmten Zeitintervallen die Druckverhältnisse an der Membran verändert. Hier hat sich als einfacher und effektiver Prozessschritt eine deutliche Erhöhung der Rotationsgeschwindigkeit für mehrere Minuten bei gleichzeitigem Schließen der Zu- und Abläufe am Filtrationsbehälter für eine Insitu-Reinigung der Membranen erwiesen. Bereits der geringe Rückfluss an Permeat durch die Membran, der sich durch die Erhöhung der Zentrifugalkraft an der Membranoberfläche ergibt und die Verstärkung der Überströmung sorgen für eine Entfernung von Ablagerungen an der Oberfläche und einem Differenzdruckverhalten nach Wiederinbetriebnahme der Filtration, das sich über die Filtrationszyklen nicht verändert. Als alternativer Reinigungsschritt ist es auch möglich, die Filtration für mehrere Minuten vollständig abzuschalten und danach wieder normal anzufahren. Verantwortlich für die Entfernung einer Deckschicht von der Membran ist in diesem Fall die Kompaktierung der Schicht während der Ruhephase und ihrer vollständigen Entfernung nach Start des Rotors. Zu beachten ist hier, dass die Zu- und Abläufe des Filters für einige Minuten geschlossen bleiben müssen. Mit dieser Vorgehensweise ist es ebenfalls möglich, die ursprünglichen Filtrationsgeschwindigkeiten der Membranen zu erreichen.

Üblicherweise wird die Filtration bei Rotationsgeschwindigkeiten zwischen 10 und 100 RPM, bevorzugt zwischen 40 und 80 RPM durchgeführt. Insbesondere bevorzugt wird die Filtration bei Rotationsgeschwindigkeiten von 40 RPM durchgeführt. Nach konstanten Zeitintervallen werden Zu- und Abläufe geschlossen und 3 Minuten lang die Rotationsgeschwindigkeit auf 80 RPM erhöht. Danach wird der Filtrationsprozess unmittelbar wieder aufgenommen und die Filtration bei Rotationsgeschwindigkeiten von 40 RPM weiter durchgeführt.

Entscheidend für die Filtrationsgeschwindigkeit ist die Viskosität der Lösung und damit verbunden die Temperatur bei der die Filtration durchgeführt wird. Vorzugsweise wird die Filtration bei Temperaturen zwischen 30 °C und 70 °C bevorzugt zwischen 50 °C und 60 °C durchgeführt. Im Falle von Alkoholatlösungen ergibt sich ein bevorzugter Temperaturbereich von 50 - 60 °C, bei der die Filtrationsgeschwindigkeit optimal eingestellt werden kann.

Auswirkungen der Temperaturen auf die Trenngrenze bzw. Permeatqualität wurden nicht festgestellt.

Die Einsatzmöglichkeit von Ultrafiltermembranen für die Hg-Entfernung aus Alkoholatlösungen ist auf Grund der chemischen Beständigkeit begrenzt. Als besonders wirksam erwiesen sich für die genannte Anwendung PTFE-Membranen. Für den Einsatz in wässrigen Laugelösungen (z.B. NaOH oder KOH, 50%ig) ist das Materialspektrum deutlich höher. Hier lassen sich neben PTFE auch Polyethersulfon, PVDF u. a. einsetzen.

Für die Entquickung von Alkoholatlösungen nach beschriebenem Verfahren werden insbesondere Gore Sinbran Filter Discs (SD162-003) mit Porengrößen von 0,03 µm auf Polyethylen-Trägermaterial bzw. Gore Membranen mit 0,05 µm auf Trägermaterial eingesetzt.

Aufgrund des hohen spezifischen Gewichts von Quecksilber und seiner Eigenschaft kolloidale Atomverbände zu bilden, kommt es während der Filtration zu einem Aufwachsen der in der Lösung verteilten Quecksilberstrukturen, die einerseits durch die Konzentrierung an der Membranoberfläche bedingt ist, andererseits aber auch durch Aufkonzentrierung im Retentat stattfinden kann. Letztendlich bilden sich Quecksilbertropfen in der Lösung, die sich im unteren Teil des Filters sammeln. Um die Aufkonzentrierung in der Lösung zu beschleunigen, wird vorzugsweise auf die Abführung eines Retentats aus dem Filtergehäuse verzichtet, d. h. die Ultrafiltration wird insbesondere bevorzugt als Dead-End-Filtration durchgeführt, mit Zulauf (Feed) und Filtratablauf (Permeat).
Diese Vorgehensweise birgt einige wesentliche Vorteile zum herkömmlichen Cross-Flow-Verfahren. Zum einen kann der apparative Aufwand und der Energieeinsatz deutlich verkleinert werden. Quecksilber wird direkt im Filtergehäuse aufkonzentriert, führt damit zu einem Wachstum des Hg-Kolloids, was wiederum die Abscheidbarkeit wesentlich verbessert. Eine Verschlechterung der Trenngrenze mit Aufkonzentrierung des Quecksilbers in der Feed-Lösung konnte dabei nicht festgestellt werden. Letztendlich kann das Quecksilber direkt aus dem Filtergehäuse durch einen Bodenablass zurück gewonnen und wieder eingesetzt werden.

Die Filtration kann im großtechnischen Maßstab mit Filtrationsgeschwindigkeiten (flowrate) von bis zu 0,25 m/h, bevorzugt im Bereich zwischen 0,1 und 0,15 m/h, betrieben werden. Der sich einstellende Differenzdruck liegt je nach Medium und Temperatur zwischen 1 und 4 bar, bevorzugt 1,5 bis 2,5 bar. Die Filtrat- bzw. Permeatkonzentration an Quecksilber variiert je nach Medium zwischen 150 und 500 ppb. Die Ausgangskonzentrationen der Lösungen haben wie beschrieben keinen Einfluss auf die Filtratkonzentration und liegen in der Regel im Bereich zwischen 2000 bis 20.000 ppb. Die bevorzugt eingesetzte Filtrationsmembranen (Sinbran) erweisen sich in der großtechnischen Anwendung als äußerst robust und erzielten Laufzeiten von mehr als 3 Jahren.

Das Verfahren gemäß der vorliegenden Erfindung hat den Vorteil, dass auf den Einsatz von Aktivkohle oder kohleähnlichen Substanzen als Adsorbentien bzw. als Hilfsstoff für die Hg-Abscheidung verzichtet werden kann, wodurch der Entsorgungsaufwand für mit Quecksilber kontaminierte Abfälle entfällt. Abgeschiedenes Quecksilber kann direkt wiederverwendet werden. Weiterhin kann das Verfahren mit hohen Laufzeiten betrieben werden, da der aufwendige Wechsel der Aktivkohle nach Sättigung mit Quecksilber entfällt, was den Personalaufwand reduziert. Ein wesentlicher Vorteil ist aber auch, dass eine gleichbleibende Filtratqualität gewährleistet wird, die unabhängig von der Zusammensetzung des Feedstroms ist. Mit Hilfe automatischer Rückspülzyklen gelingt es, dass Differenzdruckverhalten und somit die Filtrationsgeschwindigkeit konstant und den Betreuungsaufwand gering zu halten. Gegenüber herkömmlichen Cross-Flow-Anwendungen kann auf einen Retentatstrom verzichtet und die Filtration als simples Dead-End-Verfahren genutzt werden.

Es wird das erfindungsgemäße Verfahren zur Entfernung von Quecksilber aus Alkalialkoholatlösungen eingesetzt, insbesondere solchen Alkalialkoholatlösungen, die durch Zersetzung von Alkaliamalgam mit Alkohol erzeugt werden. Die Herstellung von Alkaliamalgam und seine Zersetzung mit Wasser oder Alkohol, unkatalysiert oder unter Einsatz von Katalysatoren, sind bekannte Technologien. Als Alkali werden Lithium, Natrium, Kalium, Rubidium oder Cäsium eingesetzt, vorzugsweise Natrium oder Kalium eingesetzt. Durch Zersetzung von Natrium- oder Kaliumamalgam mit

Wasser entsteht Natron- oder Kalilauge. Durch Zersetzung von Natrium- oder Kaliumamalgam mit Alkohol entsteht eine Lösung des entsprechenden Natrium- oder Kaliumalkoholats im entsprechenden Alkohol. Die Alkoholatlösungen sind dabei stets, wie oben beschrieben, mit Quecksilber verunreinigt, das mit dem erfindungsgemäßen Verfahren vollständig oder weitgehend entfernt wird.
Als Alkohol zur Erzeugung einer mit dem erfindungsgemäßen Verfahren zu behandelnden Alkalialkoholatlösung kann jeder beliebige Alkohol eingesetzt werden. Vorzugsweise wird ein substituierter oder unsubstituierter aliphatischer, alicyclischer, aromatischer, arylaliphatischer, arylalicyclischer, cycloalkylaromatischer oder alkylaromatischer Alkohol verwendet. Insbesondere werden die geradkettigen oder verzweigten aliphatischen Alkohole mit 1 bis 6 Kohlenstoffatomen verwendet, wie Methanol, Ethanol, 1-Propanol ("n-Propanol"), 2-Propanol ("iso-Propanol"), 1-Butanol ("n-Butanol"), 2-Butanol ("iso-Butanol"), 2-Methyl-1-propanol ("sec.-Butanol"), 1,1-Dimethyl-1-Ethanol ("tert.-Butanol"), oder die einzelnen isomeren C5- oder C6-Alkohole. Besonders bevorzugt ist die Verwendung von Methanol oder Ethanol.

Durch Zersetzung von Natrium- oder Kaliumamalgam mit Methanol oder Ethanol wird eine Lösung von Natriummethanolat oder Kaliummethanolat in Methanol oder eine Lösung von Natriumethanolat oder Kaliumethanolat in Ethanol erzeugt, die dann dem erfindungsgemäßen Verfahren unterzogen wird.

Die Konzentration der im erfindungsgemäßen Verfahren eingesetzten Lösung - also beispielsweise der durch Alkaliamalgamzersetzung mit Alkohol hergestellten Alkalialkoholatlösung kann in weiten Bereichen variiert werden, sie ist für die vorliegende Erfindung nicht entscheidend.

Das erfindungsgemäße Verfahren kann mit jedem anderen bekannten Quecksilber-Abreicherungsverfahren zu einem Gesamtverfahren kombiniert werden, um die Abreicherungswirkung der verschiedenen Verfahrensschritte des Gesamtverfahrens zu kombinieren. Die Reihenfolge der Durchführung der einzelnen Verfahrensschritte des Gesamtverfahrens kann grundsätzlich frei gewählt werden. Im Allgemeinen ist es vorteilhaft, Verfahrensschritte, die vorwiegend zur Entfernung größerer Quecksilbermengen geeignet sind, zuerst durchzuführen, und Feinreinigungsverfahren abschließend durchzuführen.

Das erfindungsgemäße Verfahren kann beispielsweise auch mit einem Verfahrensschritt zur destillativen Abreicherung von Quecksilber durch Einengen der Lösung kombiniert werden. Weiterhin kann das erfindungsgemäße Verfahren mit einem Filtrationsschritt unter Verwendung von alternativen Fasermaterialien oder Aktivkohle kombiniert werden. Auch derartige Filtrationsverfahren sind bekannt.
Es ist ebenso möglich, die Filtrationsschritte mehrfach durchzuführen oder sie in beliebiger Weise zu kombinieren. Beispielsweise kann mehrfach durch Kohle, mehrfach durch Fasermaterial oder mehrfach durch Kohle und Fasermaterial filtriert werden. Das erfindungsgemäße Filtrationsverfahren kann demnach auch mehrfach durchgeführt werden und/oder in beliebiger Weise und Häufigkeit mit Aktivkohlefiltration und Destillation kombiniert werden. Die konkrete Ausgestaltung und Abfolge von einzelnen Filtrationsschritten ist eine Routineaufgabe des Fachmanns, die dieser gemäß dem zu behandelnden Strom, seinem Verunreinigungsgehalt und den Anforderungen an die Abreicherung löst.
Mit dem beschriebenen Verfahren ist eine sehr einfache Abreicherung von Quecksilber möglich, ohne dass die Nachteile der bekannten Kohlefiltrationsverfahren in Kauf genommen werden müssten. Insbesondere führt das erfindungsgemäße Verfahren zu hohen Standzeiten.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

Im Folgenden werden einige Beispiele beschrieben, die die Wirksamkeit des Verfahrens darlegen sollen. Alle Zahlenangaben sind als Durchschnittswerte zu verstehen, die über die Versuchsdauer bestimmt wurden.

### Beispiele:

### Beispiel 1 (Vergleichsbeispiel):

Untersucht wurde die Trenngrenze bei der Abtrennung von Quecksilber aus einer wässrigen 50 %-igen NaOH-Lösung in einer Strömungskanalzelle (Filterzelle MTC 55, Fa. ETL Verfahrenstechnik).

| Hg Feed in ppb | Hg Permeat in ppb | Filtrationsgeschwindigkeit | Versuchsdauer | Versuchstemperatur | Membrantyp |
|---|---|---|---|---|---|
| 2150 | 170 | 50 l/hm² | 5 h | 66°C | Nadir UH 050 |

### Beispiel 2 (Vergleichsbeispiel):

Untersucht wurde die Trenngrenze bei der Abtrennung von Quecksilber aus einer ethanolischen 14 %-igen Natriumethylat-Lösung in einer Strömungskanalzelle.

| Hg Feed in ppb | Hg Permeat in ppb | Filtrationsgeschwindigkeit | Versuchsdauer | Versuchstemperatur | Membrantyp |
|---|---|---|---|---|---|
| 6110 | 122 | 228 l/hm² | 4 h | 22°C | Gore 003 |

### Beispiel 3 (Vergleichsbeispiel):

Untersucht wurde die Trenngrenze bei der Abtrennung von Quecksilber aus einer methanolischen 24 %-igen Kaliummethylat-Lösung in einer Strömungskanalzelle.

| Hg Feed in ppb | Hg Permeat in ppb | Filtrationsgeschwindigkeit | Versuchsdauer | Versuchstemperatur | Membrantyp |
|---|---|---|---|---|---|
| 2450 | 491 | 558 l/hm² | 7,5 h | 21°C | Gore 005 |

### Beispiel 4 (Vergleichsbeispiel):

Untersucht wurde die Trenngrenze bei der Abtrennung von Quecksilber aus einer methanolischen 18 %-igen Natriummethylat-Lösung in einer Strömungskanalzelle.

| Hg Feed in ppb | Hg Permeat in ppb | Filtrationsgeschwindigkeit | Versuchsdauer | Versuchstemperatur | Membrantyp |
|---|---|---|---|---|---|
| 1600 | 102 | 150 l/hm² | 36 h | 22°C | Creavis Z100S |

### Beispiel 5:

Untersucht wurde das Filtrationsverhalten einer methanolischen 18 %-igen Natriummethylat-Lösung in einer TRF-Versuchsanlage der Fa. FIB (NL), 3 Filterscheiben, rotierend, Filterfläche: 0,25 m²

| Hg Feed in ppb | Hg Permeat in ppb | Filtrationsgeschwindigkeit | Versuchsdauer | Versuchstemperatur | Membrantyp |
|---|---|---|---|---|---|
| 11176 | 325 | 72 l/hm² | 383 h | 35°C | Gore 005 |

### Beispiel 6:

Untersucht wurde das Filtrationsverhalten einer methanolischen 24 %-igen Kaliummethylat-Lösung in einer TRF-Versuchsanlage der Fa. FIB (NL),

| Hg Feed in ppb | Hg Permeat in ppb | Filtrationsgeschwindigkeit | Versuchsdauer | Versuchstemperatur | Membrantyp |
|---|---|---|---|---|---|
| 12800 | 252 | 155 l/hm² | 46 h | 33°C | Gore 005 |

### Beispiel 7:

Untersucht wurde das Filtrationsverhalten einer methanolischen 24 %-igen Kaliummethylatlösung in einer TRF-Ultrafiltrationsanlage der Fa. Minerwa (A), 27,6 m² Filterfläche, Gore Sinbran Filter Discs SD162-003, 40 RPM

| Hg Feed in ppb | Hg Permeat in ppb | Filtrationsgeschwindigkeit | Versuchsdauer | Versuchstemperatur | Membrantyp |
|---|---|---|---|---|---|
| 9500 | 221 | 117 l/hm² | 355 Tage | 52°C | Gore Sinbran Filter Discs |

Die Ergebnisse der Beispiele zeigen, dass eine effektive Entfernung von Quecksilber gemäß der vorliegenden Erfindung möglich ist.

## Patentansprüche

1. Verwendung von Filtrationsmembranen mit einer Porengröße von kleiner oder gleich 0,1 µm zur Entfernung von Quecksilber aus Quecksilber enthaltenden Lösungen, wobei die Quecksilber enthaltenden Lösungen Alkalialkoholatlösungen sind,
**dadurch gekennzeichnet,**
**dass** die Quecksilber enthaltenden Lösungen klar, vollkommen schwebstofffrei und frei von anderweitig enthaltenen Trübstoffen sind und die Filtrationsmembranen um eine Rotationsachse rotieren.

2. Verwendung gemäß Anspruch 1,
**dadurch gekennzeichnet,**
**dass** die Porengröße 0,005 bis 0,1 µm beträgt.

3. Verwendung gemäß Anspruch 1 oder 2,
**dadurch gekennzeichnet,**
**dass** Filtrationsmembranen auf Basis von Polyethersulfon, Polytetrafluorethylen oder Polyvinylidenfluorid eingesetzt werden.

4. Verfahren zur Entfernung von Quecksilber aus Quecksilber enthaltenden Lösungen durch Filtration, wobei Filtrationsmembranen mit einer Porengröße von kleiner oder gleich 0,1 µm eingesetzt werden, wobei die Quecksilber enthaltenden Lösungen Alkalialkoholatlösungen sind,
**dadurch gekennzeichnet,**
**dass** die Quecksilber enthaltenden Lösungen klar, vollkommen schwebstofffrei und frei von anderweitig enthaltenen Trübstoffen sind und dass die Filtrationsmembranen um eine Rotationsachse rotieren.

5. Verfahren gemäß Anspruch 4,
**dadurch gekennzeichnet,**
**dass** die Rotationsgeschwindigkeit zwischen 10 und 100 RPM liegt.

6. Verfahren gemäß einem oder mehrere der Ansprüche 4 bis 5,
**dadurch gekennzeichnet,**
**dass** die Filtration bei Temperaturen zwischen 30°C und 70°C durchgeführt wird.

7. Verfahren gemäß einem oder mehrere der Ansprüche 4 bis 6,
**dadurch gekennzeichnet,**
**dass** die Filtrationsmembranen in Form von Scheiben vorliegen.

8. Verfahren gemäß einem oder mehrere der Ansprüche 4 bis 7,
**dadurch gekennzeichnet,**
**dass** die Filtration als Dead-End-Filtration durchgeführt wird.

9. Verfahren gemäß einem oder mehrere der Ansprüche 4 bis 8,
**dadurch gekennzeichnet,**
**dass** die Filtration mit Filtrationsgeschwindigkeiten im Bereich zwischen 0,1 und 0,15 m/h durchgeführt wird.

10. Verfahren gemäß einem oder mehrere der Ansprüche 4 bis 9,
**dadurch gekennzeichnet,**
**dass** der Differenzdruck zwischen 1 und 4 bar liegt.

## Claims

1. Use of filtration membranes having a pore size of less than or equal to 0.1 µm for removing mercury from mercury-containing solutions where the mercury-containing solutions are alkali metal alkoxide solutions, **characterized in that** the mercury-containing solutions are clear, completely free of suspended material and free of turbidity-producing materials present in a different form and the filtration membranes rotate about a rotational axis.

2. Use according to Claim 1, **characterized in that**, the pore size is from 0.005 to 0.1 µm.

3. Use according to Claim 1 or 2, **characterized in that** filtration membranes based on polyether sulfone, polytetrafluoroethylene or polyvinylidene fluoride are used.

4. Process for removing mercury from mercury-containing solutions by filtration, filtration membranes having a pore size of less than or equal to 0.1 µm are used, where the mercury-containing solutions are alkali metal alkoxide solutions, **characterized in that** the mercury-containing solutions are clear, completely free of suspended material and free of turbidity-producing materials present in a different form and **in that** the filtration membranes rotate about a rotational axis.

5. Process according to Claim 4, **characterized in that** the speed of rotation is in the range from 10 to 100 rpm.

6. Process according to one or more of Claims 4 to 5, **characterized in that** the filtration is carried out at temperatures in the range from 30°C to 70°C.

7. Process according to one or more of Claims 4 to 6, **characterized in that** the filtration membranes are in the form of discs.

8. Process according to one or more of Claims 4 to 7, **characterized in that** the filtration is carried out as a dead-end filtration.

9. Process according to one or more of Claims 4 to 8, **characterized in that** the filtration is carried out at filtration speeds in the range from 0.1 to 0.15 m/h.

10. Process according to one or more of Claims 4 to 9, **characterized in that** the differential pressure is in the range from 1 to 4 bar.

## Revendications

1. Utilisation de membranes de filtration ayant une taille de pore inférieure ou égale à 0,1 µm pour l'élimination de mercure à partir de solutions contenant du mercure, les solutions contenant du mercure étant des solutions d'alcoolate alcalin, **caractérisée en ce que**
les solutions contenant du mercure sont transparentes, entièrement exemptes de matières en suspension et exemptes de turbidités autrement contenues, et les membranes de filtration tournent autour d'un axe de rotation.

2. Utilisation selon la revendication 1, **caractérisée en ce que** la taille de pore est de 0,005 à 0,1 µm.

3. Utilisation selon la revendication 1 ou 2, **caractérisée en ce que** des membranes de filtration à base de polyéther-sulfone, de polytétrafluoroéthylène ou de polyfluorure de vinylidène sont utilisées.

4. Procédé d'élimination de mercure à partir de solutions contenant du mercure par filtration, des membranes de filtration ayant une taille de pore inférieure ou égale à 0,1 µm étant utilisées, les solutions contenant du mercure étant des solutions d'alcoolate alcalin,
**caractérisé en ce que**
les solutions contenant du mercure sont transparentes, entièrement exemptes de matières en suspension et exemptes de turbidités autrement contenues, et **en ce que** les membranes de filtration tournent autour d'un axe de rotation.

5. Procédé selon la revendication 4, **caractérisé en ce que** la vitesse de rotation est comprise entre 10 et 100 tours/minute.

6. Procédé selon une ou plusieurs des revendications 4 à 5, **caractérisé en ce que** la filtration est réalisée à des températures comprises entre 30 °C et 70 °C.

7. Procédé selon une ou plusieurs des revendications 4 à 6, **caractérisé en ce que** les membranes de filtration se présentent sous la forme de disques.

8. Procédé selon une ou plusieurs des revendications 4 à 7, **caractérisé en ce que** la filtration est réalisée sous la forme d'une filtration frontale.

9. Procédé selon une ou plusieurs des revendications 4 à 8, **caractérisé en ce que** la filtration est réalisée avec des vitesses de filtration dans la plage comprise entre 0,1 et 0,15 m/h.

10. Procédé selon une ou plusieurs des revendications 4 à 9, **caractérisé en ce que** la différence de pression est comprise entre 1 et 4 bar.
